# EUROPEAN PATENT APPLICATION

(11) **EP 4 625 325 A1**
(43) Date of publication of application: **01.10.2025**
(21) Application number: 23894367.4
(22) Date of filing: 26.10.2023
(51) Int. Cl.: G06T 9/00

(54) **DECODING METHOD, ENCODING METHOD, DECODING DEVICE, AND ENCODING DEVICE**

(30) Priority: 22.11.2022 US 202263427208 P
(71) Applicant: Panasonic Intellectual Property Corporation of America, Torrance, CA 90504 (US)
(72) Inventor: NISHI, Takahiro, Kadoma-shi, Osaka 571-0057 (JP); SUGIO, Toshiyasu, Kadoma-shi, Osaka 571-0057 (JP); IGUCHI, Noritaka, Kadoma-shi, Osaka 571-0057 (JP); ITO, Atsushi, Kadoma-shi, Osaka 571-0057 (JP)
(74) Representative: Grünecker Patent- und Rechtsanwälte PartG mbB
(86) International application number: PCT/JP2023/038773
(87) International publication number: WO 2024/111355

(57) **Abstract**

A decoding method is a decoding method for decoding a first three-dimensional point having position information that includes a distance component, a first direction component, and a second direction component, and includes: determining a second value of a first direction component of an inter predicted point by using (i) a first value of a first direction component of a second three-dimensional point that has been decoded and (ii) a sampling interval of a first direction component (S301); and decoding the position information of the first three-dimensional point by using the second value determined (S302). For example, the second value may be determined by matching a third value of a first direction component of a third three-dimensional point to a fourth value obtained by sampling from the first value of the first direction component, using the sampling interval, the third three-dimensional point being included in an inter reference frame different from a current frame including the first three-dimensional point.

## Description

### [Technical Field]

The present disclosure relates to a decoding method, an encoding method, a decoding device, and an encoding device.

### [Background Art]

Devices or services utilizing three-dimensional data are expected to find their widespread use in a wide range of fields, such as computer vision that enables autonomous operations of cars or robots, map information, monitoring, infrastructure inspection, and video distribution. Three-dimensional data is obtained through various means including a distance sensor such as a rangefinder, as well as a stereo camera and a combination of a plurality of monocular cameras.

Methods of representing three-dimensional data include a method known as a point cloud scheme that represents the shape of a three-dimensional structure by a point cloud in a three-dimensional space. In the point cloud scheme, the positions and colors of a point cloud are stored. While point cloud is expected to be a mainstream method of representing three-dimensional data, a massive amount of data of a point cloud necessitates compression of the amount of three-dimensional data by encoding for accumulation and transmission, as in the case of a two-dimensional moving picture (examples include Moving Picture Experts Group-4 Advanced Video Coding (MPEG-4 AVC) and High Efficiency Video Coding (HEVC) standardized by MPEG).

Meanwhile, point cloud compression is partially supported by, for example, an open-source library (Point Cloud Library) for point cloud-related processing.

Furthermore, a technique for searching for and displaying a facility located in the surroundings of the vehicle by using three-dimensional map data is known (see, for example, Patent Literature (PTL) 1).

### [Citation List]

### [Patent Literature]

[PTL 1] International Publication WO 2014/020663

### [Summary of Invention]

### [Technical Problem]

In such encoding methods and decoding methods, there is a demand for improving encoding efficiency.

The present disclosure has an object to provide a decoding method, an encoding method, a decoding device, or an encoding device capable of improving encoding efficiency.

### [Solution to Problem]

A decoding method according to an aspect of the present disclosure is a decoding method for decoding a first three-dimensional point having position information that includes a distance component, a first direction component, and a second direction component, the decoding method including: determining a second value of a first direction component of an inter predicted point by using (i) a first value of a first direction component of a second three-dimensional point that has been decoded and (ii) a sampling interval of a first direction component; and decoding the position information of the first three-dimensional point by using the second value determined.

An encoding method according to an aspect of the present disclosure is an encoding method for encoding a first three-dimensional point having position information that includes a distance component, a first direction component, and a second direction component, the encoding method including: determining a second value of a first direction component of an inter predicted point by using (i) a first value of a first direction component of a second three-dimensional point that has been encoded and (ii) a sampling interval of a first direction component; and encoding the position information of the first three-dimensional point by using the second value determined.

### [Advantageous Effects of Invention]

The present disclosure can provide a decoding method, an encoding method, a decoding device, or an encoding device capable of improving encoding efficiency.

### [Brief Description of Drawings]

[FIG. 1]

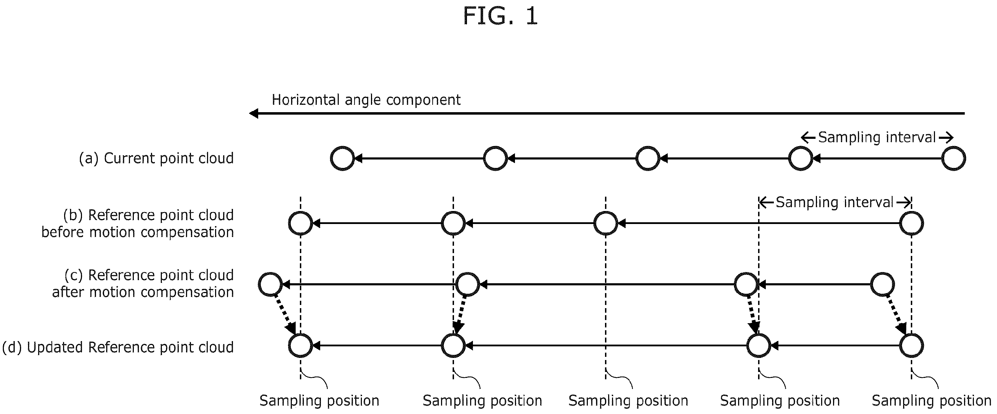

   FIG. 1 is a conceptual diagram for describing a method for updating a motion-compensated reference point cloud according to an embodiment.
[FIG. 2]

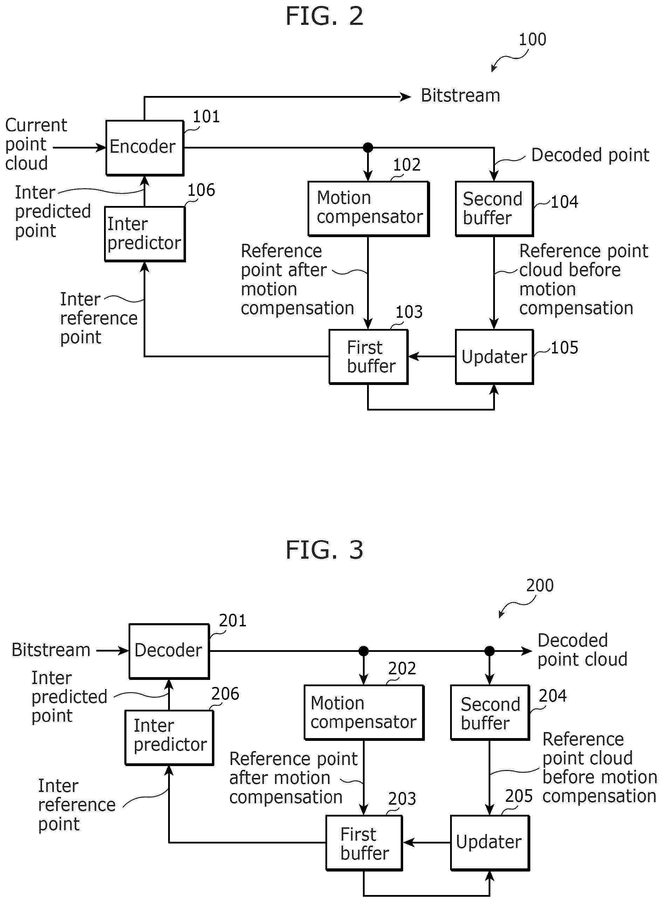

   FIG. 2 is a block diagram of an encoding device according to the embodiment.
[FIG. 3]
   FIG. 3 is a block diagram of a decoding device according to the embodiment.
[FIG. 4]

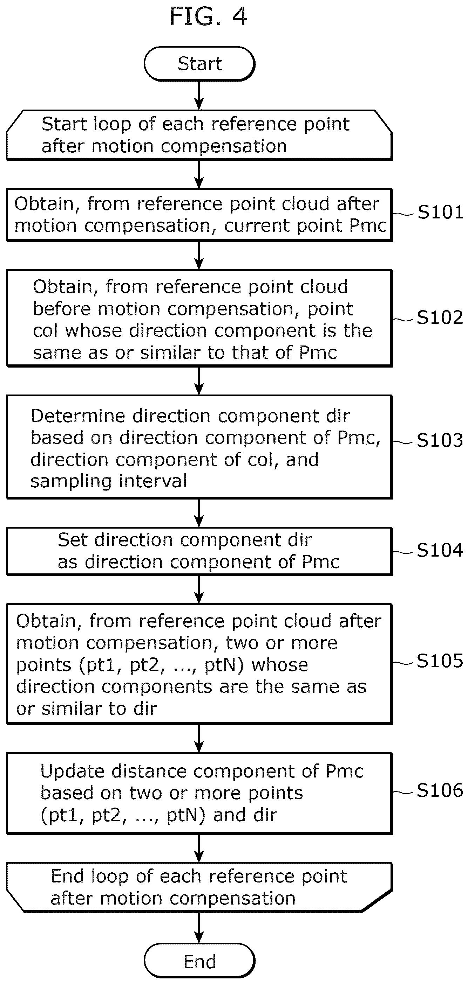

   FIG. 4 is a flowchart of updating processing of a reference point according to the embodiment.
[FIG. 5]

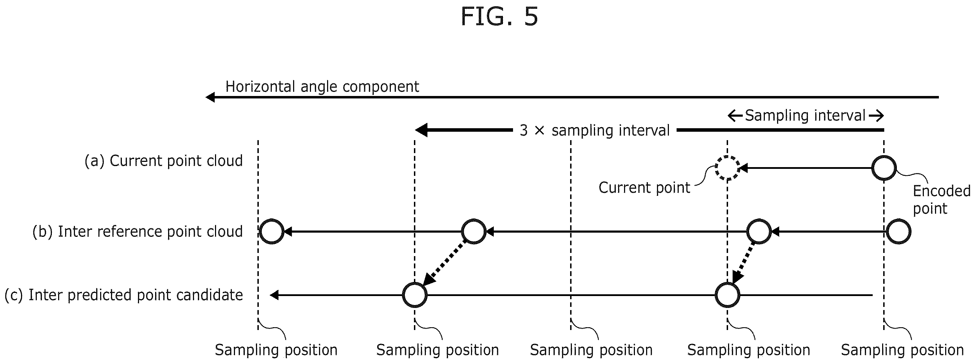

   FIG. 5 is a conceptual diagram for describing a method for determining an inter predicted point candidate according to the embodiment.
[FIG. 6]

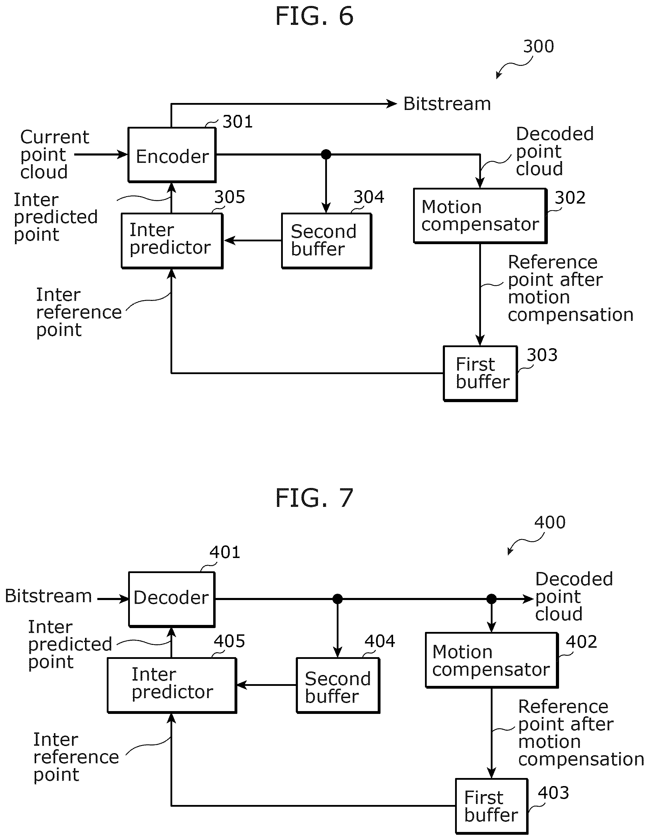

   FIG. 6 is a block diagram of an encoding device according to the embodiment.
[FIG. 7]
   FIG. 7 is a block diagram of a decoding device according to the embodiment.
[FIG. 8]

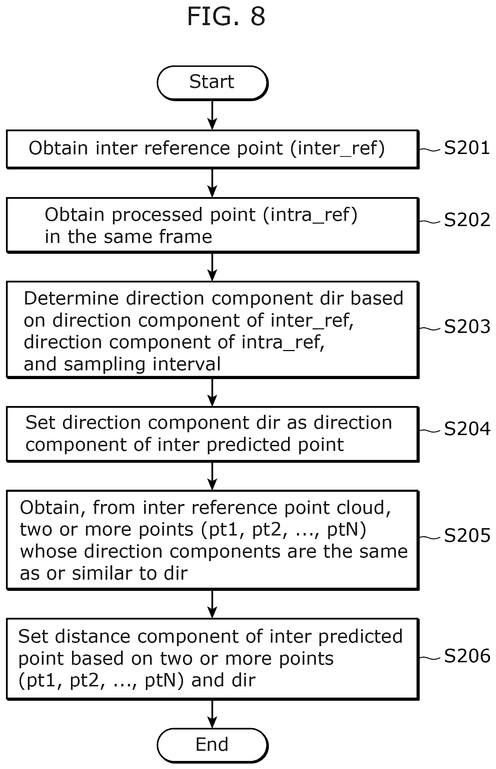

   FIG. 8 is a flowchart of inter prediction processing according to the embodiment.
[FIG. 9]

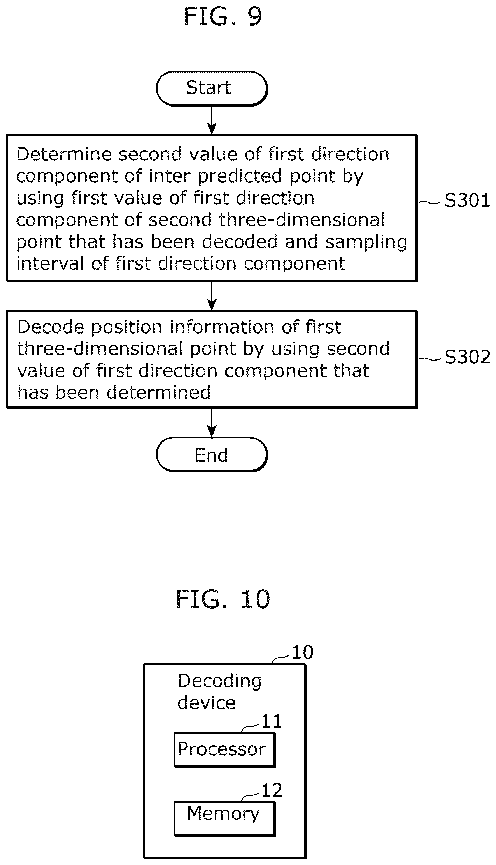

   FIG. 9 is a flowchart of decoding processing according to the embodiment.
[FIG. 10]
   FIG. 10 is a block diagram of a decoding device according to the embodiment.
[FIG. 11]

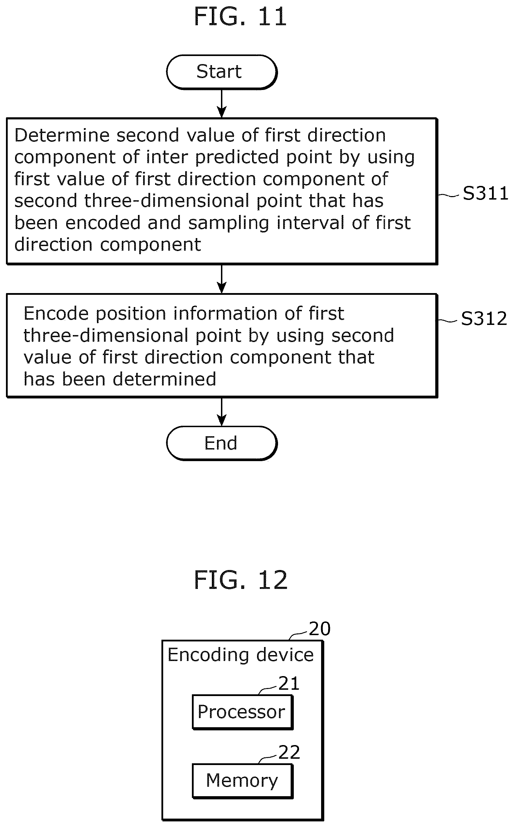

   FIG. 11 is a flowchart of encoding processing according to the embodiment.
[FIG. 12]
   FIG. 12 is a block diagram of an encoding device according to the embodiment.

### [Description of Embodiments]

A three-dimensional data decoding method according to an aspect of the present disclosure is a decoding method for decoding a first three-dimensional point having position information that includes a distance component, a first direction component, and a second direction component. The decoding method includes: determining a second value of a first direction component of an inter predicted point by using (i) a first value of a first direction component of a second three-dimensional point that has been decoded and (ii) a sampling interval of a first direction component; and decoding the position information of the first three-dimensional point by using the second value determined. By determining the first direction component of the inter predicted point using the sampling interval of a first direction component, there is a possibility that the prediction residuals of first direction components of first three-dimensional points and inter predicted points will have a biased distribution centered on a certain value. Accordingly, arithmetic encoding and arithmetic decoding are optimized, thereby improving coding efficiency.

For example, the second value may be determined by matching a third value of a first direction component of a third three-dimensional point to a fourth value obtained by sampling from the first value of the first direction component, using the sampling interval, the third three-dimensional point being included in an inter reference frame different from a current frame including the first three-dimensional point. Accordingly, there is a possibility that the prediction residuals of first direction components of first three-dimensional points and inter predicted points will have a biased distribution centered on a certain value (for example, zero or the phase difference between frames). Therefore, arithmetic encoding and arithmetic decoding are optimized, thereby improving coding efficiency.

For example, the fourth value may be a value obtained by adding N multiples (N is an integer) of the sampling interval to the first value. Accordingly, even when the number of usable second three-dimensional points is small or when the phase difference is big, the first direction component of the inter predicted point can be appropriately determined.

For example, the second three-dimensional point may be included in the current frame. Accordingly, there is a possibility that the prediction residuals of first direction components of first three-dimensional points and inter predicted points will have a biased distribution centered on zero. Therefore, arithmetic encoding and arithmetic decoding are optimized, thereby improving coding efficiency.

For example, the third three-dimensional point may be included in the inter reference frame that has been motion-compensated. Accordingly, even when there is a phase difference between the values of the first direction components of the current frame and the inter reference frame or when values of first direction components deviate from the sampling interval due to motion compensation, there is a possibility that the prediction residuals of first direction components of first three-dimensional points and inter predicted points will have a biased distribution centered on zero. Therefore, arithmetic encoding and arithmetic decoding are optimized, thereby improving coding efficiency.

For example, the third three-dimensional point may be included in the inter reference frame that has not been motion-compensated. Accordingly, even when there is a phase difference between the values of the first direction components of the current frame and the inter reference frame, there is a possibility that the prediction residuals of first direction components of first three-dimensional points and inter predicted points will have a biased distribution centered on zero. Therefore, arithmetic encoding and arithmetic decoding are optimized, thereby improving coding efficiency.

For example, the second three-dimensional point may be included in the inter reference frame. Accordingly, there is a possibility that the prediction residuals of first direction components of first three-dimensional points and inter predicted points will have a biased distribution centered on a certain value (for example, zero or the phase difference between frames). Therefore, arithmetic encoding and arithmetic decoding are optimized, thereby improving coding efficiency.

For example, the third three-dimensional point may be included in the inter reference frame that has been motion-compensated. Accordingly, even when values of first direction components deviate from the sampling interval due to motion compensation, there is a possibility that the prediction residuals of first direction components of first three-dimensional points and inter predicted points will have a biased distribution centered on zero. Therefore, arithmetic encoding and arithmetic decoding are optimized, thereby improving coding efficiency.

For example, the decoding method may further include: determining a sixth value of a distance component of the inter predicted point by using fifth values of distance components of fourth three-dimensional points that have been decoded. The position information of the first three-dimensional point may be decoded using the inter predicted point having the second value of the first direction component and the sixth value of the distance component that has been determined. Accordingly, since an inter predicted point having a distance component that is suited to the updated first direction component can be used, encoding efficiency improves.

For example, the first direction components may be horizontal angle components, and in the decoding of the position information, the horizontal angle component included in the position information may be decoded using the second value.

An encoding method according to an aspect of the present disclosure is an encoding method for encoding a first three-dimensional point having position information that includes a distance component, a first direction component, and a second direction component, the encoding method including: determining a second value of a first direction component of an inter predicted point by using (i) a first value of a first direction component of a second three-dimensional point that has been encoded and (ii) a sampling interval of a first direction component; and encoding the position information of the first three-dimensional point by using the second value determined. By determining the first direction component of the inter predicted point using the sampling interval of a first direction component, there is a possibility that the prediction residuals of first direction components of first three-dimensional points and inter predicted points will have a biased distribution centered on a certain value. Accordingly, arithmetic encoding is optimized, thereby improving coding efficiency.

A decoding device according to an aspect of the present disclosure is a decoding device that decodes a first three-dimensional point having position information that includes a distance component, a first direction component, and a second direction component. The decoding device includes a processor and a memory. Using the memory, the processor: determines a second value of a first direction component of an inter predicted point by using (i) a first value of a first direction component of a second three-dimensional point that has been decoded and (ii) a sampling interval of a first direction component; and decodes the position information of the first three-dimensional point by using the second value determined.

An encoding device according to an aspect of the present disclosure is an encoding device that encodes a first three-dimensional point having position information that includes a distance component, a first direction component, and a second direction component. The encoding device includes a processor and a memory. Using the memory, the processor: determines a second value of a first direction component of an inter predicted point by using (i) a first value of a first direction component of a second three-dimensional point that has been encoded and (ii) a sampling interval of a first direction component; and encodes the position information of the first three-dimensional point by using the second value determined.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

### [EMBODIMENT]

Hereinafter, an encoding device (three-dimensional data encoding device) and a decoding device (three-dimensional data decoding device) according to the present embodiment will be described. The encoding device encodes three-dimensional data to thereby generate a bitstream. The decoding device decodes the bitstream to thereby generate three-dimensional data.

Three-dimensional data is, for example, three-dimensional point cloud data (also called point cloud data). A point cloud, which is a set of three-dimensional points, represents the three-dimensional shape of an object. The point cloud data includes position information and attribute information on the three-dimensional points. The position information indicates the three-dimensional position of each three-dimensional point. It should be noted that position information may also be called geometry information. For example, the position information is represented using an orthogonal coordinate system or a polar coordinate system.

Attribute information indicates color information, reflectance, infrared information, a normal vector, or time-of-day information, for example. One three-dimensional point may have a single item of attribute information or have a plurality of kinds of attribute information.

### [1. Method for updating reference point cloud after motion compensation]

### [1-1. Outline]

FIG. 1 is a conceptual diagram for describing a method for updating a reference point cloud after motion compensation in the present embodiment. FIG. 1 illustrates, when encoding a point cloud whose position information is represented by a polar coordinate system (an elevation component, a horizontal angle component, and a distance component) using a prediction tree (Predtree), which horizontal angle component of each point cloud has a point at a specific elevation component. Here, the prediction tree is a tree structure that illustrates a reference relationship among in a plurality of points (a plurality of nodes) in intra prediction.

In FIG. 1, (a) illustrates a current point cloud including a current point to be encoded or decoded. In a point cloud obtained by using a laser sensor in which a sensor unit, such as LiDAR, is rotated, points are sampled at regular intervals (angles). Therefore, as illustrated in (a) in FIG. 1, there is a tendency for a point to exist at a horizontal angle position for each sampling interval.

In FIG. 1, (b) illustrates a reference point cloud (inter reference frame) that is obtained at a time different from that of a current point cloud, and that is referred to in the inter encoding of the current point cloud, and illustrates the reference point cloud (on which motion compensation has not been performed) before motion compensation is performed. As illustrated in (b) in FIG. 1, there is a possibility that there is a difference in phase between the reference point cloud before motion compensation and the current point cloud (a difference between the horizontal angle position illustrated in (a) in FIG. 1 and the horizontal angle position of a point illustrated in (b) in FIG. 1). On the other hand, in the reference point cloud before motion compensation, similar to the current point cloud, there is a tendency for a point to exist at a horizontal angle position for each sampling interval.

In FIG. 1, (c) illustrates the reference point cloud after motion compensation. As illustrated in (c) in FIG. 1, in the reference point cloud after motion compensation, there is a tendency for the horizontal angle positions where points exist to have irregular intervals (do not have regular intervals). The reason is that there is a possibility that the amount (angle) of motion compensation is different for each reference point. For example, when performing motion compensation on a frame-by-frame basis on a point cloud obtained while the laser sensor is moving, although the amount of motion compensation of each component (x, y, z) of each point becomes the same in an orthogonal coordinate system, there is a possibility that the amount of motion compensation of each component of each point is different in a polar coordinate system. More specifically, the positions used as the reference position (for example, the sensor position) of the current point cloud illustrated in (a) in FIG. 1 and the reference position of the reference point cloud illustrated in (c) in FIG. 1 are different in a horizontal plane. In this case, there is a possibility that the amount of motion compensation of y of a horizontal component is different for each point.

Here, when performing intra prediction on the horizontal angle component of a current point included in the current point cloud by using a processed (encoded or decoded) point included in the current point cloud, or when performing inter prediction with reference to the reference point cloud before motion compensation, there is a tendency that the remainder obtained by dividing the prediction residual by the sampling interval has a biased distribution centered on a certain value (for example, the phase difference between zero or the current point cloud and the reference point cloud before motion compensation). Therefore, since the arithmetic code (coding table) used for arithmetic encoding or arithmetic decoding of the remainder is optimized, coding efficiency is likely to be improved. However, when performing inter prediction on the horizontal angle component of a current point with reference to the reference point cloud after motion compensation illustrated in (c) in FIG. 1, the distribution of the remainder obtained by dividing the prediction residual by the sampling interval does not tend to be biased toward any particular value. Therefore, since the arithmetic code used for arithmetic encoding or arithmetic decoding of the remainder is not optimized, coding efficiency is likely to be deteriorated.

Therefore, in the present embodiment, as illustrated in (d) in FIG. 1, the horizontal angle position of each point of the reference point cloud after motion compensation illustrated in (c) in FIG. 1 is updated to be aligned with the sampling position of the reference point cloud before motion compensation illustrated in (b) in FIG. 1. Specifically, a sampling position is a horizontal angle position where a point exists in the reference point cloud before motion compensation illustrated in (b) in FIG. 1, or a horizontal angle position that is an integer multiple of the sampling interval away from the horizontal angle position.

Accordingly, when performing inter prediction on the horizontal angle component of a current point with reference to the updated reference point cloud illustrated in (d) in FIG. 1, the remainder obtained by dividing the prediction residual by the sampling interval has a biased distribution centered on a certain value (for example, the phase difference between the current point cloud and the reference point cloud before motion compensation). Therefore, since the arithmetic code used for arithmetic encoding or arithmetic decoding of the remainder of the horizontal angle component is optimized, there is a possibility that coding efficiency can be improved.

It should be noted that the distance component of each point included in the updated reference point cloud illustrated in (d) in FIG. 1 may be determined from the distance component of a plurality of points included in the reference point cloud after motion compensation illustrated in (c) in FIG. 1. For example, an updated distance component is calculated by calculating the weighted average according to the horizontal angle component included in the reference point cloud after motion compensation. Accordingly, since the distance component according to the updated horizontal angle component can be used for prediction, there is a possibility that the prediction accuracy of the distance component can be improved.

Here, in updating of the horizontal angle component, it is preferable to replace a reference point included in the reference point cloud after motion compensation with the sampling position closest to the reference point. Accordingly, not only the remainder obtained by dividing the prediction residual by the sampling interval, but also the quotient can be reduced. That is, the code amount can be suppressed. In addition, the prediction accuracy of distance information is improved.

In the above example, although the example has been illustrated in which a reference point cloud after motion compensation is generated and thereafter the reference point cloud is updated, when performing motion compensation, the motion compensation may be performed such that the position of each reference point included in the reference point cloud after motion compensation is the horizontal angle position where each point exists illustrated in (b) in FIG. 1, or a horizontal angle position that is an integer multiple of the sampling interval away from the horizontal angle position.

### [1-2. Configuration of encoding device and decoding device]

FIG. 2 is a block diagram illustrating the configuration of encoding device 100 (a three-dimensional data encoding device or a point cloud data encoding device) according to the present embodiment. Encoding device 100 includes encoder 101, motion compensator 102, first buffer 103, second buffer 104, updater 105, and inter predictor 106. It should be noted that, here, although a description will be given of processing in which a current point cloud to be encoded is represented in a polar coordinate system, and inter prediction encoding is performed on the position information of the current point cloud, encoding device 100 may perform intra prediction encoding, or may perform other processing, such as encoding of the attribute information of the current point cloud.

Encoder 101 generates a bitstream by encoding the current point cloud to be encoded, by using an inter predicted point. For example, encoder 101 calculates a prediction residual by calculating the difference between the position information of a current point included in the current point cloud and the position information of the inter predicted point. For example, the prediction residual is calculated for each component. Next, encoder 101 calculates a quantization coefficient by quantizing the calculated prediction residual, generates encoded data of the current point by arithmetically encoding the calculated quantization coefficient, and generates a bitstream including the encoded data.

In addition, encoder 101 outputs a decoded point that matches the result of decoding the bitstream. For example, encoder 101 restores the prediction residual by inverse quantizing the calculated quantization coefficient, and generates the position information of the decoded point by adding the restored prediction residual and the position information on the inter predicted point.

Motion compensator 102 generates a reference point after motion compensation by performing motion compensation on the decoded point, and stores the generated reference point after motion compensation in first buffer 103. First buffer 103 stores a plurality of reference points after motion compensation (a reference point cloud after motion compensation).

In addition, second buffer 104 stores a plurality of decoded points as a plurality of reference points before motion compensation (a reference point cloud before motion compensation).

Next, updater 105 updates the reference point cloud after motion compensation stored in first buffer 103 as illustrated in, for example, (d) in FIG. 1, with reference to the reference point cloud after motion compensation stored in first buffer 103 and the reference point cloud before motion compensation stored in second buffer 104.

Inter predictor 106 determines an inter predicted point (inter predicted value) by referring to, as an inter reference point, the reference point included in the updated reference point cloud stored in first buffer 103.

FIG. 3 is a block diagram illustrating the configuration of decoding device 200 (a three-dimensional data decoding device or a point cloud data decoding device) according to the present embodiment. Decoding device 200 includes decoder 201, motion compensator 202, first buffer 203, second buffer 204, updater 205, and inter predictor 206. It should be noted that, here, although a description will be given of processing in which a current point cloud to be decoded is represented in the polar coordinate system, and inter prediction decoding is performed on the position information of the current point cloud, decoding device 200 may perform intra prediction decoding, or may perform other processing, such as decoding of the attribute information of the current point cloud.

Decoder 201 decodes a bitstream by using an inter predicted point, and outputs a plurality of decoded points (a decoded point cloud). For example, decoder 201 generates a quantization coefficient by arithmetically decoding encoded data included in the bitstream, generates a prediction residual by inverse-quantizing the generated quantization coefficient, and generates the position information of a decoded point by adding the generated prediction residual and the position information of an inter predicted point.

Motion compensator 202, first buffer 203, second buffer 204, updater 205, and inter predictor 206 perform processing similar to that of motion compensator 102, first buffer 103, second buffer 104, updater 105, and inter predictor 106 that are illustrated in FIG. 2.

Motion compensator 202 generates a reference point after motion compensation by performing motion compensation on the decoded point, and stores the generated reference point after motion compensation in first buffer 203. First buffer 203 stores a plurality of reference points after motion compensation (a reference point cloud after motion compensation).

In addition, second buffer 204 stores a plurality of decoded points as a plurality of reference points before motion compensation (a reference point cloud before motion compensation).

Next, updater 205 updates the reference point cloud after motion compensation stored in first buffer 203 as illustrated in, for example, (d) in FIG. 1, with reference to the reference point cloud after motion compensation stored in first buffer 203 and the reference point cloud before motion compensation stored in second buffer 204.

Inter predictor 206 determines an inter predicted point (inter predicted value) by referring to, as an inter reference point, the reference point included in the updated reference point cloud stored in first buffer 203.

With the above device configurations, it becomes possible to perform the method of updating a reference point cloud after motion compensation described by using FIG. 1.

It should be noted that, in the above description, although the example has been illustrated in which inter predictor 106 performs inter prediction only with reference to the updated reference point cloud stored in first buffer 103, inter predictor 106 may perform inter prediction by referring to, as an inter reference point, a reference point included in at least one of the reference point cloud stored in first buffer 103 and the reference point cloud before motion compensation stored in second buffer 104. Similarly, inter predictor 206 may perform inter prediction by referring to, as an inter reference point, a reference point included in at least one of the reference point cloud stored in first buffer 203 and the reference point cloud before motion compensation stored in second buffer 204.

### [1-3. Updating processing]

FIG. 4 is a flowchart of updating processing of a reference point by updater 105. It should be noted that, here, although the operation of updater 105 will be described, the operation of updater 205 is also similar.

The processing illustrated in FIG. 4 is repeated for each point included in the reference point cloud after motion compensation stored in first buffer 103. First, updater 105 obtains, from a reference point cloud after motion compensation, current point Pmc to be processed (S101).

Next, updater 105 obtains, from the reference point cloud before motion compensation stored in second buffer 104, point col whose direction component is the same as or similar to that of current point Pmc (S102). For example, updater 105 may obtain a point that has the same elevation component and the same or similar horizontal angle component. It should be noted that, instead of the elevation component, the quantization coefficient of the elevation component, or the index of a scanning line in the laser sensor may be used.

Next, updater 105 determines direction component dir based on the direction component of current point Pmc, the direction component of point col, and the sampling interval (S103). Specifically, updater 105 determines, based on the direction component of current point Pmc, one direction component dir, out of the direction component of point col, or the direction component that is separated from the direction component of point col by a predetermined interval. For example, out of the horizontal angle component of point col, or the horizontal angle component separated from the horizontal angle component of point col by an integer multiple of the sampling interval (the sampling position of the reference point cloud before motion compensation), updater 105 determines the horizontal angle component closest to the horizontal angle component of current point Pmc as the horizontal angle component of direction component dir. In addition, updater 105 sets the elevation component of current point Pmc or point col as the elevation component of direction component dir.

Next, updater 105 sets direction component dir as the direction component (the elevation component and the horizontal angle component) of current point Pmc (S104). It should be noted that, when the elevation component of current point Pmc is set as the elevation component of direction component dir, updater 105 may update only the horizontal angle component of current point Pmc.

As a result of the above, the remainder obtained by dividing the prediction residual of the horizontal angle component by the sampling interval has a biased distribution centered on the certain value (for example, the phase difference between current point cloud and the reference point cloud before motion compensation). Accordingly, since the arithmetic code used for arithmetic encoding or arithmetic decoding of the remainder of the horizontal angle component is optimized, there is a possibility that coding efficiency can be improved.

Next, updater 105 obtains, from the reference point cloud after motion compensation, two or more points (pt1, pt2, ..., ptN) whose direction components are the same as or similar to direction component dir (S105). Next, updater 105 updates the distance component of current point Pmc based on points pt1, pt2, ..., ptN and direction component dir (S106). For example, updater 105 may obtain two points pt1 and pt2 whose elevation components are the same as that of current point Pmc, and whose horizontal angle components are similar to that of current point Pmc, and may determine the distance component of current point Pmc from the weighted average of the distance components of point pt1 and point pt2. In addition, the weight is determined based on the difference in the horizontal angle component between current point Pmc and point pt1, and the difference in the horizontal angle component between current point Pmc and point pt2. For example, the smaller the difference in the horizontal angle component, the larger the weight is set. It should be noted that current point Pmc may be included in the two or more points (pt1, pt2, ..., ptN), or need not be included in the two or more points (pt1, pt2, ..., ptN).

With steps S105 and S106, since the distance component according to the horizontal angle component that is set in step S104 can be used for prediction, there is a possibility that the prediction accuracy of the distance component can be improved.

It should be noted that not all the processing illustrated in FIG. 4 necessarily need to be performed, and a part of the processing may be omitted. For example, steps S105 and S106 need not be performed.

In addition, the sampling interval may be the sampling interval itself of the sensor used for obtaining the current point cloud, or may be a value obtained by rounding the sampling interval of the sensor to an integer such as a power of 2. In addition, the information indicating the sampling interval of the sensor by using a higher-level syntax of a bitstream, or the information indicating the expected value of the sampling interval may be notified. For example, the higher-level syntax is SPS, GPS, or a slice header. SPS (Sequence Parameter Set) is metadata (parameter set) common to a plurality of frames. GPS (Geometry Parameter Set) is metadata (a parameter set) related to encoding of position information. For example, GPS is metadata common to a plurality of frames. A slice is a processing unit obtained by dividing one frame into a plurality of parts, and a slice header is the header information provided for each slice. In addition, this information indicating the sampling interval or the information indicating the expected value of the sampling interval may be a quantization step value used when quantizing the prediction residual of the horizontal angle component.

### [2. Method for determining inter predicted point candidate]

### [2-1. Outline]

In the above, the example has been described in which the reference point cloud after motion compensation is updated such that the direction component of the reference point cloud after motion compensation is aligned to the direction component of the reference point cloud before motion compensation. Hereinafter, a description will be given of a technique capable of achieving effects similar to those described above by determining, in inter prediction processing, the direction component of an inter predicted point candidate based on the sampling interval, instead of updating a reference point cloud.

FIG. 5 is a conceptual diagram for describing a method of determining an inter predicted point candidate according to the present embodiment. FIG. 5 illustrates, when a point cloud whose position information is represented in the polar coordinate system is encoded by using a prediction tree, which horizontal angle component of each point cloud has a point at a specific elevation component.

In FIG. 5, (a) illustrates a current point cloud including a current point to be encoded or decoded. In the point cloud obtained by using the laser sensor in which the sensor part, such as LiDAR, is rotated, points are sampled at regular intervals. Therefore, as indicated by a broken line in FIG. 5, there is a tendency for a point included in the current point cloud to exist at a horizontal angle position for each sampling interval.

In FIG. 5, (b) illustrates a inter reference point cloud (inter reference frame) that is obtained at a time different from that of the current point cloud, and that is to be referred to in inter encoding of the current point cloud. In the inter reference point cloud (for example, the reference point cloud after motion compensation), due to the difference in obtaining time or the influence of motion compensation, there is a tendency for a point to exist at a horizontal angle position that is shifted from the horizontal angle position (sampling position) where a possibility that each point exists in the current point cloud is high.

When intra prediction is performed on the horizontal angle component of a current point included in the current point cloud by using a processed (encoded or decoded) point included in the current point cloud, there is a tendency that the remainder obtained by dividing the prediction residual by the sampling interval has a biased distribution on a certain value (for example, zero). Therefore, since the arithmetic code used for arithmetic encoding or arithmetic decoding of the remainder is optimized, coding efficiency is likely to be improved.

However, when performing inter prediction of the horizontal angle component of the current point with reference to the inter reference point illustrated in (b) in FIG. 5, the distribution of the remainder obtained by dividing the prediction residual by the sampling interval does not tend to be biased toward any particular value. Therefore, since the arithmetic code used for arithmetic encoding or arithmetic decoding of the remainder is not optimized, coding efficiency is likely to be deteriorated.

Therefore, in the present embodiment, as illustrated in (c) in FIG. 5, an inter predicted point candidate is generated by aligning the horizontal angle position of each point of the inter reference point cloud illustrated in (b) in FIG. 5 with the sampling position of the current point cloud. Specifically, the sampling position is either the horizontal angle position where a point included in the current point cloud exists, or a horizontal angle position that is separated from the horizontal angle position by an integer multiple of the sampling interval. In addition, the horizontal angle component of a current point is predicted by using the generated inter predicted point candidate. Accordingly, the remainder obtained by dividing the prediction residual of the horizontal angle component by the sampling interval has a biased distribution centered on a certain value (for example, zero). Therefore, since the arithmetic code used for arithmetic encoding or arithmetic decoding of the remainder of the horizontal angle component is optimized, there is a possibility that coding efficiency can be improved.

It should be noted that the distance component of each point included in the inter predicted point candidates illustrated in (c) in FIG. 5 may be determined from the distance components of a plurality of points included in the inter reference point cloud illustrated in (b) in FIG. 5. For example, the distance components of a plurality of points included in the inter predicted point candidates are calculated from a weighted average according to the horizontal angle components of the plurality of points included in the inter reference point cloud. Accordingly, since the distance component according to the horizontal angle component of the inter predicted point candidate can be used for prediction, there is a possibility that the prediction accuracy of the distance component can be improved.

It should be noted that, in the processing illustrated in FIG. 5, the prediction residual tends to become 0 more easily than in the processing illustrated in FIG. 1.

### [2-2. Configuration of encoding device and decoding device]

FIG. 6 is a block diagram illustrating the configuration of encoding device 300 (a three-dimensional data encoding device or a point cloud data encoding device) according to the present embodiment. Encoding device 300 includes encoder 301, motion compensator 302, first buffer 303, second buffer 304, and inter predictor 305. It should be noted that, here, although a description will be given of processing in which a current point cloud to be encoded is represented in the polar coordinate system, and inter prediction encoding is performed on the position information of the current point cloud, encoding device 300 may perform intra prediction encoding, or may perform other processing, such as encoding of the attribute information of the current point cloud.

Encoder 301 generates a bitstream by encoding the current point cloud to be encoded by using an inter predicted point. In addition, encoder 301 outputs a decoded point that matches the result of decoding the bitstream. It should be noted that specific processing of encoder 301 is similar to that of, for example, encoder 101 illustrated in FIG. 2.

Motion compensator 302 generates a reference point after motion compensation by performing motion compensation on the decoded point, and stores the generated reference point after motion compensation in first buffer 303. First buffer 303 stores a plurality of reference points after motion compensation (a reference point cloud after motion compensation) as an inter reference point cloud.

In addition, second buffer 304 stores a plurality of decoded points. For example, second buffer 304 stores decoded points corresponding to encoded points included in the same frame as a current point.

Inter predictor 305 selects an inter reference point from the inter reference point cloud stored in first buffer 303, calculates a plurality of inter predicted point candidates by updating the inter reference point with reference to the plurality of encoded points stored in second buffer 304, and determines an inter predicted point from the plurality of inter predicted point candidates.

FIG. 7 is a block diagram illustrating the configuration of decoding device 400 (a three-dimensional data decoding device or a point cloud data decoding device) according to the present embodiment. Decoding device 400 includes decoder 401, motion compensator 402, first buffer 403, second buffer 404, and inter predictor 405. It should be noted that, here, although a description will be given of processing in which a current point cloud to be decoded is represented in the polar coordinate system, and inter prediction decoding is performed on the position information of the current point cloud, decoding device 400 may perform intra prediction decoding, or may perform other processing, such as decoding of the attribute information of the current point cloud.

Decoder 401 decodes a bitstream by using an inter predicted point, and outputs a plurality of decoded points (a decoded point cloud). It should be noted that specific processing of decoder 401 is similar to that of, for example, decoder 201 illustrated in FIG. 3.

Motion compensator 402, first buffer 403, second buffer 404, and inter predictor 405 perform processing similar to that of motion compensator 302, first buffer 303, second buffer 304, and inter predictor 305 that are illustrated in FIG. 6.

Motion compensator 402 generates a reference point after motion compensation by performing motion compensation on a decoded point, and stores the generated reference point after motion compensation in first buffer 403. First buffer 403 stores a plurality of reference points after motion compensation (a reference point cloud after motion compensation) as an inter reference point cloud.

In addition, second buffer 404 stores a plurality of decoded points. For example, second buffer 404 stores a decoded point included in the same frame as a current point.

Inter predictor 405 selects an inter reference point from the inter reference point cloud stored in first buffer 403, calculates a plurality of inter predicted point candidates by updating the inter reference point with reference to the plurality of decoded points stored in second buffer 404, and determines an inter predicted point from the plurality of inter predicted point candidates.

With the above device configurations, it becomes possible to perform the method of determining an inter predicted point candidate described by using FIG. 5.

It should be noted that, in the above description, although the example has been illustrated in which inter predictor 305 performs inter prediction only with reference to the inter reference point cloud stored in first buffer 303, encoding device 300 may further include a third buffer that stores a reference point cloud before motion compensation for inter prediction, and may perform inter prediction by referring to, as an inter reference point, a reference point included in at least one of the inter reference point cloud (the reference point cloud after motion compensation) stored in first buffer 303 and the reference point cloud before motion compensation stored in the third buffer. Similarly, decoding device 400 may further include a third buffer that stores the reference point cloud before motion compensation for inter prediction, and may perform inter prediction by referring to, as an inter reference point, a reference point included in at least one of the inter reference point cloud (the reference point cloud after motion compensation) stored in first buffer 403 and the reference point cloud before motion compensation stored in the third buffer.

In addition, when the reference point cloud before motion compensation is used for inter prediction, inter predictor 305 or inter predictor 405 may, similar to the above, calculate, for an inter reference point included in the reference point cloud before motion compensation, a plurality of inter predicted point candidates by updating an inter reference point by referring to the plurality of decoded points stored in second buffer 404.

Here, although there is no shift in the horizontal angle position due to motion compensation between the current point cloud and the reference point cloud before motion compensation, there is a shift (phase difference) in the horizontal angle position due to the difference in obtaining time. Therefore, the shift in the horizontal angle position due to the difference in obtaining time can be reduced by performing updating processing similar to the above on the reference point cloud before motion compensation. Accordingly, since the arithmetic code used for arithmetic encoding or arithmetic decoding of the remainder of the horizontal angle component is optimized, there is a possibility that coding efficiency can be improved.

### [2-3. Inter prediction processing]

FIG. 8 is a flowchart of inter prediction processing by inter predictor 305. It should be noted that, here, although the operation of inter predictor 305 will be described, the operation of inter predictor 405 is also similar.

First, inter predictor 305 obtains inter reference point inter_ref from the inter reference point cloud stored in first buffer 303 (S201). Next, inter predictor 305 obtains processed point intra_ref that is stored in second buffer 304, and that is in the same frame as a current point (S202). For example, point intra_ref is a point whose elevation component is the same as that of the current point and whose horizontal angle component is the same as or similar to the current point. It should be noted that, instead of the elevation component, the quantization coefficient of the elevation component, or the index of a scanning line in the laser sensor may be used. Specifically, point intra_ref is the parent node of the current point in the prediction tree, a node immediately before the current point in processing order (encoding order or decoding order), or the like.

Next, inter predictor 305 determines direction component dir based on the direction component of point inter_ref, the direction component of point intra_ref, and the sampling interval (S203). Specifically, inter predictor 305 determines one direction component dir based on the direction component of point inter_ref, out of the direction component of point intra_ref, or the direction component that is separated from the direction component of point intra_ref by a predetermined interval. For example, out of the horizontal angle component of point intra_ref, or the horizontal angle component (the sampling position of the current point cloud) that is separated from the horizontal angle component of point intra_ref by an integer multiple of the sampling interval, inter predictor 305 determines the horizontal angle component closest to the horizontal angle component of point inter_ref as the horizontal angle component of direction component dir. In addition, inter predictor 305 sets the elevation component of point inter_ref or point intra_ref as the elevation component of direction component dir.

Next, inter predictor 305 sets direction component dir as the direction component (the elevation component and the horizontal angle component) of an inter predicted point (S204). It should be noted that, here, although the example has been described in which direction component dir includes both the elevation component and the horizontal angle component, direction component dir may include only the horizontal angle component, or may include only the elevation component. That is, inter prediction may be applied to one of the elevation component and the horizontal angle component, and inter prediction need not be applied to the other.

As a result of the above, the remainder obtained by dividing the prediction residual of the horizontal angle component by the sampling interval has a biased distribution centered on a certain value (for example, zero). Accordingly, since the arithmetic code used for arithmetic encoding or arithmetic decoding of the remainder of the horizontal angle component is optimized, there is a possibility that coding efficiency can be improved.

Next, inter predictor 305 obtains, from the inter reference point cloud, two or more points (pt1, pt2, ..., ptN) whose direction components are the same as or similar to direction component dir (S205). Next, inter predictor 305 sets the distance component of an inter predicted point based on points pt1, pt2, ..., ptN and direction component dir (S206). For example, inter predictor 305 may obtain two points pt1 and pt2 whose elevation components are the same as that of point inter_ref, and whose horizontal angle components are similar to that of point inter_ref, and may determine the distance component of the inter prediction point from the weighted average of the distance components of point pt1 and point pt2. In addition, the weight is determined based on the difference in the horizontal angle component between point inter_ref and point pt1, and the difference in the horizontal angle component between point inter_ref and point pt2. For example, the smaller the difference in the horizontal angle component, the larger the weight is set. It should be noted that the two or more points (pt1, pt2, ..., ptN) may include point inter_ref, or need not include point inter_ref.

With steps S205 and S206, since the distance component according to the horizontal angle component that is set in step S204 can be used for prediction, there is a possibility that the prediction accuracy of the distance component can be improved.

It should be noted that not all the processing illustrated in FIG. 8 necessarily need to be performed, and a part of the processing may be omitted or simplified. For example, instead of steps S205 and S206, processing of setting the distance component of point inter_ref as the distance component of the inter predicted point may be performed.

In addition, the sampling interval may be the sampling interval itself of the sensor used for obtaining the current point cloud, or may be a value obtained by rounding the sampling interval of the sensor to an integer such as a power of 2. In addition, the information indicating the sampling interval of the sensor by using a higher-level syntax of a bitstream, or the information indicating the expected value of the sampling interval may be notified. For example, the higher-level syntax is SPS, GPS, or a slice header. In addition, this information indicating the sampling interval or the information indicating the expected value of the sampling interval may be a quantization step value used when quantizing the prediction residual of the horizontal angle component.

### [3. Variations]

It should be noted that the technique of the present embodiment is also effective when a coefficient is generated by performing calculation using a predetermined fixed value on a prediction residual, without dividing the prediction residual by the sampling interval, and the coefficient is arithmetically encoded. For example, the technique of the present embodiment is also effective when generating a coefficient by dividing the prediction residual by the predetermined fixed value. Here, the predetermined fixed value is, for example, a multiple of the sampling interval.

In the above-described embodiment, the laser sensor in which the sensor part is rotated at a fixed angular velocity is listed as an example of the sensor that generates a current point cloud, but the configuration of the sensor that generates a current point cloud is not limited to this. For example, the technical idea of the present embodiment is also applicable to a sensor whose sampling position is known, such as a sensor that performs sampling by using a sampling pattern defined in advance. That is, there is a possibility that the efficiency of arithmetic encoding is improved by aligning a reference point after motion compensation with a known sampling position, or setting an inter predicted point candidate to the known sampling position.

In addition, in the above-described example, the sampling direction is a horizontal angle direction, but the sampling direction may be an elevation direction. Furthermore, the technical idea of the present embodiment is applicable even when the sampling direction is a plane direction consisting of the horizontal angle direction and the elevation direction.

In addition, in the above-described example, a point is generated at the sampling position based on detection by the laser sensor. However, the technical idea of the present embodiment is not limited to detection by the laser sensor, but is applicable to a method that detects a point for each sampling interval in a predetermined direction.

In addition, in the above-described description, point cloud data is listed as an example of three-dimensional data to be processed, but the technique of the present embodiment can be applied to other three-dimensional data such as mesh data. Mesh data (also called three-dimensional mesh data) is a data format used in CG (Computer Graphics), and is a collection of surface data that indicates the three-dimensional shape of an object. Mesh data includes point-cloud information (for example, vertex information). Therefore, for example, when encoding mesh data generated from point cloud data, the technique of the present embodiment can be applied to encoding of this point cloud information.

### [Conclusion]

A decoding device (three-dimensional data decoding device) according to the embodiment performs the process illustrated in FIG. 9. The decoding device decodes a first three-dimensional point having position information that includes a distance component, a first direction component, and a second direction component (for example, an elevation angle component and a horizontal angle component). The decoding device: determines a second value (for example, direction component dir) of a first direction component of an inter predicted point by using (i) a first value of a first direction component of a second three-dimensional point that has been decoded and (ii) a sampling interval of a first direction component (S301); and decodes the position information of the first three-dimensional point by using the second value determined (S302). For example, the decoding device generates (decodes) the first direction component of the first three-dimensional point by adding up the first direction component (second value) of the inter predicted point and the prediction residual of the first direction component of the first three-dimensional point obtained from a bitstream.

By determining the first direction component of the inter predicted point using the sampling interval of a first direction component, there is a possibility that the prediction residuals of first direction components of first three-dimensional points and inter predicted points will have a biased distribution centered on a certain value. Accordingly, arithmetic encoding and arithmetic decoding are optimized, thereby improving coding efficiency.

For example, the second value is determined by matching a third value of a first direction component of a third three-dimensional point to a fourth value (for example, a sampling position) obtained by sampling from the first value of the first direction component, using the sampling interval, the third three-dimensional point being included in an inter reference frame different from a current frame including the first three-dimensional point.

Accordingly, there is a possibility that the prediction residuals of first direction components of first three-dimensional points and inter predicted points will have a biased distribution centered on a certain value (for example, zero or the phase difference between frames). Therefore, arithmetic encoding and arithmetic decoding are optimized, thereby improving coding efficiency.

For example, the fourth value is a value obtained by adding N multiples (N is an integer) of the sampling interval to the first value. Accordingly, even when the number of usable second three-dimensional points is small or when the phase difference is big, the first direction component of the inter predicted point can be appropriately determined.

For example, as illustrated in FIG. 5, and so on, the second three-dimensional point is included in the current frame. Accordingly, there is a possibility that the prediction residuals of first direction components of first three-dimensional points and inter predicted points will have a biased distribution centered on zero. Therefore, arithmetic encoding and arithmetic decoding are optimized, thereby improving coding efficiency.

For example, the third three-dimensional point is included in the inter reference frame that has been motion-compensated. Accordingly, even when there is a phase difference between the values of the first direction components of the current frame and the inter reference frame or when values of first direction components deviate from the sampling interval due to motion compensation, there is a possibility that the prediction residuals of first direction components of first three-dimensional points and inter predicted points will have a biased distribution centered on zero. Therefore, arithmetic encoding and arithmetic decoding are optimized, thereby improving coding efficiency.

For example, the third three-dimensional point is included in the inter reference frame that has not been motion-compensated. Accordingly, even when there is a phase difference between the values of the first direction components of the current frame and the inter reference frame, there is a possibility that the prediction residuals of first direction components of first three-dimensional points and inter predicted points will have a biased distribution centered on zero. Therefore, arithmetic encoding and arithmetic decoding are optimized, thereby improving coding efficiency.

For example, as illustrated in FIG. 1, and so on, the second three-dimensional point is included in the inter reference frame. Accordingly, there is a possibility that the prediction residuals of first direction components of first three-dimensional points and inter predicted points will have a biased distribution centered on a certain value (for example, zero or the phase difference between frames). Therefore, arithmetic encoding and arithmetic decoding are optimized, thereby improving coding efficiency.

For example, the third three-dimensional point is included in the inter reference frame that has been motion-compensated. Accordingly, even when values of first direction components deviate from the sampling interval due to motion compensation, there is a possibility that the prediction residuals of first direction components of first three-dimensional points and inter predicted points will have a biased distribution centered on zero. Therefore, arithmetic encoding and arithmetic decoding are optimized, thereby improving coding efficiency.

For example, the decoding device further determines a sixth value of a distance component of the inter predicted point by using fifth values of distance components of fourth three-dimensional points that have been decoded, and decodes the position information of the first three-dimensional point using the inter predicted point having the second value of the first direction component and the sixth value of the distance component that has been determined. Accordingly, since an inter predicted point having a distance component that is suited to the updated first direction component can be used, encoding efficiency improves.

For example, the first direction components are horizontal angle components, and, in the decoding of the position information (S302), the horizontal angle component included in the position information of the first three-dimensional point is decoded using the second value.

FIG. 10 is a block diagram of decoding device 10. For example, decoding device 10 includes processor 11 and memory 12, and processor 11 performs the above-described processes using memory 12.

Furthermore, an encoding device (three-dimensional data encoding device) according to the embodiment performs the process illustrated in FIG. 11. The encoding device encodes a first three-dimensional point having position information that includes a distance component, a first direction component, and a second direction component. The encoding device: determines a second value of a first direction component of an inter predicted point by using (i) a first value of a first direction component of a second three-dimensional point that has been encoded and (ii) a sampling interval of a first direction component (S311); and encodes the position information of the first three-dimensional point by using the second value determined (S312). For example, the encoding device calculates a prediction residual which is the difference between the first direction component (second value) of the inter predicted point and the first direction component of the first three-dimensional point.

By determining the first direction component of the inter predicted point using the sampling interval of a first direction component, there is a possibility that the prediction residuals of first direction components of first three-dimensional points and inter predicted points will have a biased distribution centered on a certain value. Accordingly, arithmetic encoding is optimized, thereby improving coding efficiency.

Furthermore, the encoding device may perform the same process as the decoding device. Specifically, the encoding device may perform processing in which the decoding of the decoding device described above is replaced with encoding.

FIG. 12 is a block diagram of encoding device 20. For example, encoding device 20 includes processor 21 and memory 22, and processor 21 performs the above-described processes using memory 22.

An encoding device (three-dimensional data encoding device), a decoding device (three-dimensional data decoding device), and the like, according to embodiments of the present disclosure and variations thereof have been described above, but the present disclosure is not limited to these embodiments, etc.

Note that each of the processors included in the encoding device, the decoding device, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the constituent elements may be implemented as dedicated hardware or may be realized by executing a software program suited to such constituent elements. Alternatively, the constituent elements may be implemented by a program executor such as a CPU or a processor reading out and executing the software program recorded in a recording medium such as a hard disk or a semiconductor memory.

The present disclosure may also be implemented as an encoding method (three-dimensional data encoding method), a decoding method (three-dimensional data decoding method), or the like executed by the encoding device (three-dimensional data encoding device), the decoding device (three-dimensional data decoding device), and the like.

Furthermore, the present disclosure may be implemented as a program for causing a computer, a processor, or a device to execute the above-described encoding method or decoding method. Furthermore, the present disclosure may be implemented as a bitstream generated by the above-described encoding method. Furthermore, the present disclosure as a recording medium on which the program or the bitstream is recorded. For example, the present disclosure may be implemented as a non-transitory computer-readable recording medium on which the program or the bitstream is recorded.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

An encoding device, a decoding device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining constituent elements in different embodiments, without materially departing from the spirit of the present disclosure.

### [Industrial Applicability]

The present disclosure is applicable to an encoding device and a decoding device.

### [Reference Signs List]

10, 200, 400 decoding device
11, 21 processor
12, 22 memory
20, 100, 300 encoding device
101, 301 encoder
102, 202,302, 402 motion compensator
103, 203, 303, 403 first buffer
104, 204, 304, 404 second buffer
105, 205 updater
106, 206, 305, 405 inter predictor
201, 401 decoder

## Claims

1. A decoding method for decoding a first three-dimensional point having position information that includes a distance component, a first direction component, and a second direction component, the decoding method comprising:
determining a second value of a first direction component of an inter predicted point by using (i) a first value of a first direction component of a second three-dimensional point that has been decoded and (ii) a sampling interval of a first direction component; and
decoding the position information of the first three-dimensional point by using the second value determined.

2. The decoding method according to claim 1, wherein
the second value is determined by matching a third value of a first direction component of a third three-dimensional point to a fourth value obtained by sampling from the first value of the first direction component, using the sampling interval, the third three-dimensional point being included in an inter reference frame different from a current frame including the first three-dimensional point.

3. The decoding method according to claim 2, wherein
the fourth value is a value obtained by adding N multiples (N is an integer) of the sampling interval to the first value.

4. The decoding method according to claim 2, wherein
the second three-dimensional point is included in the current frame.

5. The decoding method according to claim 4, wherein
the third three-dimensional point is included in the inter reference frame that has been motion-compensated.

6. The decoding method according to claim 4, wherein
the third three-dimensional point is included in the inter reference frame that has not been motion-compensated.

7. The decoding method according to claim 2, wherein
the second three-dimensional point is included in the inter reference frame.

8. The decoding method according to claim 7, wherein
the third three-dimensional point is included in the inter reference frame that has been motion-compensated.

9. The decoding method according to claim 1, further comprising:
determining a sixth value of a distance component of the inter predicted point by using fifth values of distance components of fourth three-dimensional points that have been decoded, wherein
the position information of the first three-dimensional point is decoded using the inter predicted point having the second value of the first direction component and the sixth value of the distance component that has been determined.

10. The decoding method according to claim 1, wherein
the first direction components are horizontal angle components, and
in the decoding of the position information, the horizontal angle component included in the position information is decoded using the second value.

11. An encoding method for encoding a first three-dimensional point having position information that includes a distance component, a first direction component, and a second direction component, the encoding method comprising:
determining a second value of a first direction component of an inter predicted point by using (i) a first value of a first direction component of a second three-dimensional point that has been encoded and (ii) a sampling interval of a first direction component; and
encoding the position information of the first three-dimensional point by using the second value determined.

12. A decoding device that decodes a first three-dimensional point having position information that includes a distance component, a first direction component, and a second direction component, the decoding device comprising:
a processor; and
a memory, wherein
using the memory, the processor:
determines a second value of a first direction component of an inter predicted point by using (i) a first value of a first direction component of a second three-dimensional point that has been decoded and (ii) a sampling interval of a first direction component; and
decodes the position information of the first three-dimensional point by using the second value determined.

13. An encoding device that encodes a first three-dimensional point having position information that includes a distance component, a first direction component, and a second direction component, the encoding device comprising:
a processor; and
a memory, wherein
using the memory, the processor:
determines a second value of a first direction component of an inter predicted point by using (i) a first value of a first direction component of a second three-dimensional point that has been encoded and (ii) a sampling interval of a first direction component; and
encodes the position information of the first three-dimensional point by using the second value determined.
